# EUROPEAN PATENT SPECIFICATION

(11) **EP 2 880 076 B1**
(45) Date of publication and mention of the grant of the patent: **18.04.2018**
(21) Application number: 13741676.4
(22) Date of filing: 24.07.2013
(51) Int. Cl.: C08G 63/672, C11D 3/37

(54) **POLYESTERS**
POLYESTER
POLYESTERS

(30) Priority: 31.07.2012 EP 12005550
(43) Date of publication of application: 10.06.2015
(73) Proprietor: Clariant International Ltd, 4132 Muttenz (CH)
(72) Inventor: FISCHER, Dirk, 55270 Klein-Winternheim (DE); LINDNER, Thomas, 65197 Wiesbaden (DE)
(74) Representative: Mikulecky, Klaus
(86) International application number: PCT/EP2013/002195
(87) International publication number: WO 2014/019659

(56) References cited:
- EP-A1- 1 661 933
- EP-A2- 0 220 156
- WO-A1-01/58980
- WO-A1-2012/104156
- DE-A1- 10 127 146

## Description

The invention relates to new polyesters and a process for their preparation. The polyesters are useful as soil release agents in laundry detergent and fabric care products.

The term "soil release agent" is applied to materials that modify the fabric surface minimizing the subsequent soiling and making the cleaning of the fabric easier on further washing cycles.

Laundry detergent compositions containing polyesters have been widely disclosed in the art.

DE 10 2007 013 217 A1 and WO 2007/079850 A1 disclose anionic polyesters that may be used as soil release components in washing and cleaning compositions.

DE 10 2007 005 532 A1 describes aqueous formulations of soil release oligo- and polyesters with a low viscosity. The aqueous formulations may e.g. be used in washing and cleaning compositions.

EP 0 964 015 A1 discloses soil release oligoesters that may be used as soil release polymers in detergents and that are prepared using polyols comprising 3 to 6 hydroxyl groups.

EP 1 661 933 A1 is directed to at room temperature flowable, amphiphilic and nonionic oligoesters prepared by reacting dicarboxylic acid compounds, polyol compounds and water-soluble alkylene oxide adducts and their use as additive in washing and cleaning compositions.

However, many of the polyesters described in the prior art are in need of improved stability in an alkaline environment. Especially in alkaline heavy duty washing liquids polyesters often show turbidity upon incorporation and by alkaline hydrolysis thereby also losing soil release power.

Therefore, it was the object of the present invention to provide new polyesters which have an advantageous stability in alkaline environment, possess a beneficial solubility and advantageously are clearly soluble in alkaline compositions such as alkaline heavy duty washing liquids and also possess advantageous soil release properties.

Surprisingly this object is solved by polyesters according to the following formula (I) 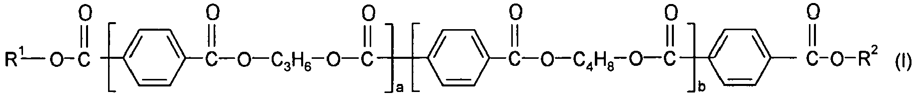 wherein
- R¹ and R²: independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group or are HO-(C₃H₆) or HO-(C₄H₈),
- n: is based on a molar average a number of from 40 to 50,
- m: is based on a molar average a number of from 1 to 7, and
- a + b: is based on a molar average a number of from 4 to 9,
characterized in that a based on a molar average is a number of from 2.8 to 8.1 and b based on a molar average is a number of from 0.4 to 2.7 and the groups -O-C₄H₈ - in the structural units indexed with "b" and in the structural units HO-(C₄H₈) are of formula -O-CH(CH₃)-CH(CH₃)-. Therefore, a subject matter of the present invention are polyesters according to the following formula (I) 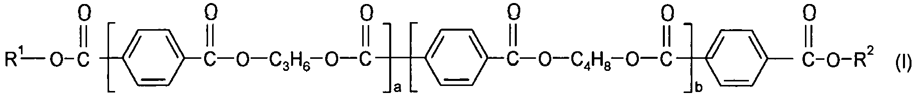 wherein
- R¹ and R²: independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group or are HO-(C₃H₆) or HO-(C₄H₈),
- n: is based on a molar average a number of from 40 to 50,
- m: is based on a molar average a number of from 1 to 7, and
- a + b: is based on a molar average a number of from 4 to 9,
characterized in that a based on a molar average is a number of from 2.8 to 8.1 and b based on a molar average is a number of from 0.4 to 2.7 and the groups -O-C₄H₈- in the structural units indexed with "b" and in the structural units HO-(C₄H₈) are of formula -O-CH(CH₃)-CH(CH₃)-. In the inventive polyesters the sum "a + b" based on a molar average preferably is a number of from 5 to 8.

In these preferred inventive polyesters wherein the sum "a+b" based on a molar average is a number of from 5 to 8, the variable "a" based on a molar average preferably is a number of from 3.5 to 7.2 and the variable "b" based on a molar average preferably is a number of from 0.5 to 2.4.

In the inventive polyesters the sum "a + b" based on a molar average more preferably is a number of from 6 to 7.

In these preferred inventive polyesters wherein the sum "a+b" based on a molar average is a number of from 6 to 7, the variable "a" based on a molar average preferably is a number of from 4.2 to 6.3 and the variable "b" based on a molar average preferably is a number of from 0.6 to 2.1. Among these inventive polymers those polymers are preferred wherein the variable "a" based on a molar average is a number of from 4.8 to 5.6 and the variable "b" based on a molar average is a number of from 1.2 to 1.4.

In the inventive polyesters variable "m" based on a molar average preferably is a number of from 2 to 5 and more preferably is 3.

In the inventive polyesters the variable "n" based on a molar average preferably is a number of from 43 to 47, more preferably is a number of from 44 to 46 and even more preferably is 45. Polyesters as defined above according to formula (I) 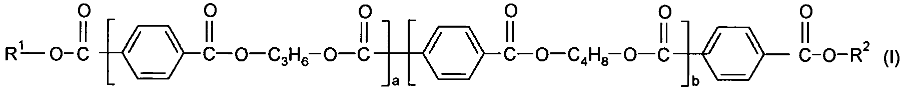 wherein
- R¹ and R²: independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group,
- n: is based on a molar average a number of from 44 to 46,
- m: is based on a molar average 3, and
- a + b: is based on a molar average a number of from 5 to 8
are particularly preferred.

Among these particularly preferred inventive polyesters the polyesters wherein the variable "a" based on a molar average is a number of from 3.5 to 7.2 and the variable "b" based on a molar average is a number of from 0.5 to 2.4 are preferred. Polyesters as defined above according to formula (I) 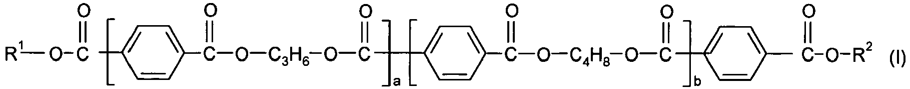 wherein
- R¹ and R²: independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group,
- n: is based on a molar average a number of from 44 to 46,
- m: is based on a molar average 3, and
- a + b: is based on a molar average a number of from 6 to 7
are especially preferred.

Among these especially preferred inventive polyesters the polyesters wherein the variable "a" based on a molar average is a number of from 4.2 to 6.3 and the variable "b" based on a molar average is a number of from 0.6 to 2.1 are preferred.

In the above-mentioned particularly preferred and especially preferred inventive polyesters the variable "n" based on a molar average preferably is 45. Polyesters as defined above according to formula (I) 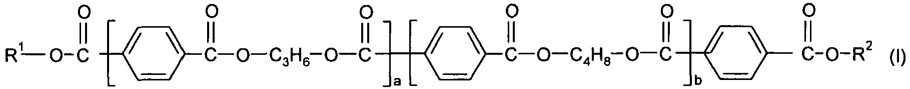 wherein
- R¹ and R²: independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group,
- n: is based on a molar average 45,
- m: is based on a molar average 3,
- a + b: is based on a molar average a number of from 6 to 7,
- a: based on a molar average is a number of from 4.8 to 5.6, and
- b: based on a molar average is a number of from 1.2 to 1.4
are extraordinarily preferred.

In the inventive polyesters the molar ratio of structural units indexed with "a" : structural units indexed with "b" preferably is of from 70 : 30 to 90 : 10 and more preferably is 80 : 20.

In the inventive polyesters the structural units indexed with "a" and the structural units indexed with "b" preferably are distributed blockwise, alternating or statistically and more preferably are distributed statistically.

The groups -O-C₂H₄- in the structural units "H₃C-(OC₂H₄)ₙ-(OC₃H₆)ₘ" are of the formula -O-CH₂-CH₂-.

The groups -O-C₃H₆- in the structural units indexed with "a", in the structural units "H₃C-(OC₂H₄)ₙ-(OC₃H₆)ₘ" and in the structural units HO-(C₃H₆) are of the formula -O-CH(CH₃)-CH₂- or -O-CH₂-CH(CH₃)-, i.e. are of the formula

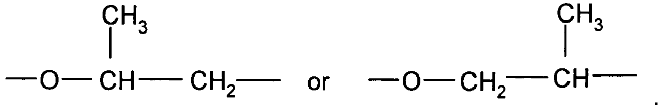

The groups -O-C₄H₈- in the structural units indexed with "b" and in the structural units HO-(C₄H₈) are of the formula -O-CH(CH₃)-CH(CH₃)-, i.e. are of the formula

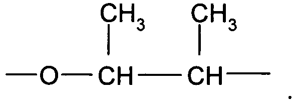

The inventive polyesters may be used in substance, i.e. as such, but may also be provided as aqueous solutions. The aqueous solutions are e.g. beneficial with respect to their handling and e.g. the metering of the inventive polyester is very easy. Preferably, the aqueous solutions comprise the inventive polyesters in an amount of from 25 to 70 weight-% based on the total mass of the aqueous solution.

Therefore, a further subject matter of the invention is an aqueous solution comprising an inventive polyester in an amount of from 25 to 70 weight-% based on the total mass of the aqueous solution. These aqueous solutions may even consist of the inventive polyester and water.

The inventive polyesters may advantageously be used in washing or laundry detergent compositions. Besides the inventive polyesters these washing or laundry detergent compositions may comprise one or more optional ingredients, e.g. they may comprise conventional ingredients commonly used in laundry detergent compositions. Examples of optional ingredients include, but are not limited to builders, surfactants, bleaching agents, bleach active compounds, bleach activators, bleach catalysts, photobleaches, dye transfer inhibitors, color protection agents, anti-redeposition agents, dispersing agents, fabric softening and antistatic agents, fluorescent whitening agents, enzymes, enzyme stabilizing agents, foam regulators, defoamers, malodour reducers, preservatives, disinfecting agents, hydrotopes, fibre lubricants, anti-shrinkage agents, buffers, fragrances, processing aids, colorants, dyes, pigments, anti-corrosion agents, fillers, stabilizers and other conventional ingredients for washing or laundry detergent compositions.

The inventive polyesters have an advantageous stability in alkaline environment, possess a beneficial solubility and advantageously are clearly soluble in alkaline compositions such as alkaline heavy duty washing liquids and also possess advantageous soil release properties. In washing or laundry detergent compositions they result in a beneficial washing performance, in particular also after storage. Furthermore, the inventive polyesters possess advantageous foam suppressing properties. This is not only advantageous when the washing or laundry detergent compositions comprising the inventive polyesters are applied but also advantageously reduces foaming during handling of the inventive polyesters.

The inventive polyesters may advantageously be prepared by a process which comprises heating dimethyl terephthalate (DMT), 1,2-propylene glycol (PG), 2,3-butylene glycol (BG), and H₃C-(OC₂H₄)ₙ-(OC₃H₆)ₘ-OH, wherein the -(OC₂H₄) groups and the -(OC₃H₆) groups are arranged blockwise and the block consisting of the -(OC₃H₆) groups is bound to the hydroxyl group -OH and n and m are as defined for the inventive polyesters, with the addition of a catalyst, to temperatures of from 160 to 220°C, firstly at atmospheric pressure, and then continuing the reaction under reduced pressure at temperatures of from 160 to 240 °C.

Therefore, a further subject matter of the invention is a process for the preparation of the inventive polyesters which comprises heating dimethyl terephthalate (DMT), 1,2-propylene glycol (PG), 2,3-butylene glycol (BG) and H₃C-(OC₂H₄)ₙ-(OC₃H₆)ₘ-OH, wherein the -(OC₂H₄) groups and the -(OC₃H₆) groups are arranged blockwise and the block consisting of the -(OC₃H₆) groups is bound to the hydroxyl group -OH and n and m are as defined for the inventive polyesters, with the addition of a catalyst, to temperatures of from 160 to 220 °C, firstly at atmospheric pressure, and then continuing the reaction under reduced pressure at temperatures of from 160 to 240 °C.

Reduced pressure preferably means a pressure of from 0.1 to 900 mbar and more preferably a pressure of from 0.5 to 500 mbar.

In a preferred embodiment of the invention the inventive process is characterized in that
a) dimethyl therephthalate, 1,2-propylene glycol, 2,3-butylene glycol, H₃C-(OC₂H₄)ₙ-(OC₃H₆)ₘ-OH and a catalyst are added to a reaction vessel, heated under inert gas, preferably nitrogen, to a temperature of from 160 °C to 220 °C to remove methanol and then pressure is reduced to below atmospheric pressure, preferably to a pressure of from 200 to 900 mbar and more preferably to a pressure of from 400 to 600 mbar for completion of the transesterification, and
b) in a second step the reaction is continued at a temperature of from 210 °C to 240 °C and at a pressure of from 0.1 to 10 mbar and preferably of from 0.5 to 5 mbar to form the polyester.

Sodium acetate (NaOAc) and tetra isopropyl orthotitanate (IPT) is preferably used as the catalyst system in the inventive process.

The examples below are intended to illustrate the invention in detail without, however, limiting it thereto. unless explicitly stated otherwise, all percentages given are percentages by weight (% by wt. or wt.-%).

### General procedure for the preparation of the inventive polyesters

The polyester synthesis is carried out by the reaction of dimethyl terephthalate (DMT), 1,2-propylene glycol (PG), 2,3-butylene glycol (BG) and methyl polyalkyleneglycol using sodium acetate (NaOAc) and tetraisopropyl orthotitanate (IPT) as the catalyst system. The synthesis is a two-step procedure. The first step is a transesterification and the second step is a polycondensation.

### Transesterification

Dimethyl terephthalate (DMT), 1,2-propylene glycol (PG), 2,3-butylene glycol (BG), methyl polyalkyleneglycol, sodium acetate (anhydrous) (NaOAc) and tetraisopropyl orthotitanate (IPT) are weighed into a reaction vessel at room temperature.

For the melting process and homogenization, the mixture is heated up to 170 °C for 1 h and then up to 210 °C for a further 1h sparged by a nitrogen stream. During the transesterification methanol is released from the reaction and is distilled out of the system (distillation temperature < 55 °C). After 2 h at 210 °C nitrogen is switched off and the pressure is reduced to 400 mbar over 3 h.

### Polycondenzation

The mixture is heated up to 230 °C. At 230 °C the pressure is reduced to 1 mbar over 160 min. Once the polycondenzation reaction has started, a 1,2-propylene glycol / 2,3-butylene glycol mixture is distilled out of the system. The mixture is stirred for 4 h at 230 °C and a pressure of 1 mbar. The reaction mixture is cooled down to 140 - 150 °C. Vacuum is released with nitrogen and the molten Polymer is transferred into a glass bottle.

### Example I:

| Amount [g] | Amount [mol] | Raw Material [Abbreviation] |
|---|---|---|
| 97.1 | 0.50 | DMT |
| 18.02 | 0.2 | BG |
| 60.88 | 0.8 | PG |
| 310.56 | 0.145 | H₃C-(OC₂H₄)₄₅-(OC₃H₆)₃-OH |
| 0.5 | 0.0061 | NaOAc |
| 0.2 | 0.0007 | IPT |

An inventive polyester according to formula (I) is obtained wherein
- R¹ and R²: are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group,
- n: is based on a molar average 45,
- m: is based on a molar average 3, and
- a + b: is based on a molar average a number of from 6 to 7,
- a: based on a molar average is a number of from 4.8 to 5.6, and
- b: based on a molar average is a number of from 1.2 to 1.4, and the groups -O-C₄H₈- in the structural units indexed with "b" are of formula -O-CH(CH₃)-CH(CH₃)-.

## Claims

1. Polyester according to the following formula (I) 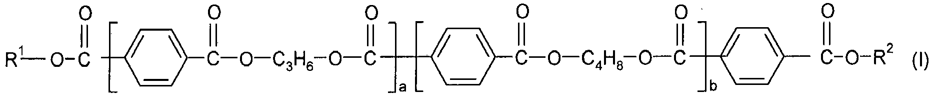 wherein
R¹ and R² independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group or are HO-(C₃H₆) or HO-(C₄H₈),
n is based on a molar average a number of from 40 to 50,
m is based on a molar average a number of from 1 to 7, and
a + b is based on a molar average a number of from 4 to 9,
**characterized in that** a based on a molar average is a number of from 2.8 to 8.1 and b based on a molar average is a number of from 0.4 to 2.7 and the groups -O-C₄H₈- in the structural units indexed with "b" and in the structural units HO-(C₄H₈) are of the formula -O-CH(CH₃)-CH(CH₃)-.

2. Polyester according to claim 1, **characterized in that** the sum a + b based on a molar average is a number of from 5 to 8, a based on a molar average is a number of from 3.5 to 7.2 and b based on a molar average is a number of from 0.5 to 2.4.

3. Polyester according to claim 1, **characterized in that** the sum a + b based on a molar average is a number of from 6 to 7, a based on a molar average is a number of from 4.2 to 6.3 and b based on a molar average is a number of from 0.6 to 2.1.

4. Polyester according to claim 3, **characterized in that** a based on a molar average is a number of from 4.8 to 5.6 and b based on a molar average is a number of from 1.2 to 1.4

5. Polyester according to one or more of claims 1 to 4, **characterized in that** m based on a molar average is a number of from 2 to 5.

6. Polyester according to claim 5, **characterized in that** m based on a molar average is 3.

7. Polyester according to one or more of claims 1 to 6, **characterized in that** n based on a molar average is a number of from 43 to 47.

8. Polyester according to claim 7, **characterized in that** n based on a molar average is a number of from 44 to 46.

9. Polyester according to claim 8, **characterized in that** n based on a molar average is 45.

10. Polyester according to one or more of claims 1, 2 and 5 to 8, **characterized in that**
R¹ and R² independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group,
n is based on a molar average a number of from 44 to 46,
m is based on a molar average 3, and
a + b is based on a molar average a number of from 5 to 8.

11. Polyester according to claim 10, **characterized in that** a based on a molar average is a number of from 3.5 to 7.2 and b based on a molar average is a number of from 0.5 to 2.4.

12. Polyester according to claim 10, **characterized in that**
R¹ and R² independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group,
n is based on a molar average a number of from 44 to 46,
m is based on a molar average 3, and
a + b is based on a molar average a number of from 6 to 7.

13. Polyester according to claim 12, **characterized in that** a based on a molar average is a number of from 4.2 to 6.3 and b based on a molar average is a number of from 0.6 to 2.1.

14. Polyester according to one or more of claims 10 to 13, **characterized in that** n based on a molar average is 45.

15. Polyester according to one or more of claims 1 to 14, **characterized in that**
R¹ and R² independently of one another are H₃C-(OC₂H₄)ₙ-(OC₃H₆)ₘ wherein the -(OC₂H₄) groups and the -(OC₃H₆) groups are arranged blockwise and the block consisting of the -(OC₃H₆) groups is bound to a COO group,
n is based on a molar average 45,
m is based on a molar average 3,
a + b is based on a molar average a number of from 6 to 7,
a based on a molar average is a number of from 4.8 to 5.6, and
b based on a molar average is a number of from 1.2 to 1.4.

16. Polyester according to one or more of claims 1 to 3 and 5 to 14, **characterized in that** the molar ratio of structural units indexed with "a" : structural units indexed with "b" is of from 70 : 30 to 90 : 10.

17. Polyester according to one or more of claims 1 to 16, **characterized in that** the molar ratio of structural units indexed with "a": structural units indexed with "b" is 80 : 20.

18. Polyester according to one or more of claims 1 to 17, **characterized in that** the structural units indexed with a and the structural units indexed with b are distributed blockwise, alternating or statistically.

19. Polyester according to claim 18, **characterized in that** the structural units indexed with a and the structural units indexed with b are distributed statistically.

20. Process for the preparation of a polyester according to one or more of claims 1 to 19, **characterized in that** it comprises heating dimethyl terephthalate, 1,2-propylene glycol, 2,3-butylene glycol, and H₃C-(OC₂H₄)ₙ-(OC₃H₆)ₘ-OH, wherein the -(OC₂H₄) groups and the -(OC₃H₆) groups are arranged blockwise and the block consisting of the -(OC₃H₆) groups is bound to the hydroxyl group -OH and n and m are as defined in claim 1, with the addition of a catalyst, to temperatures of from 160 to 220 °C, firstly at atmospheric pressure, and then continuing the reaction under reduced pressure at temperatures of from 160 to 240 °C.

## Patentansprüche

1. Polyester der folgenden Formel (I) 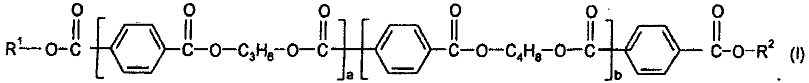 worin
R¹ und R² unabhängig voneinander H₃C-(OC₂H₄)ₙ-(OC₃H₆)ₘ sind,
wobei
die - (OC₂H₄) -Gruppen und die - (OC₃H₆) -Gruppen blockweise angeordnet sind und der Block, der aus den -(OC₃H₆)-Gruppen besteht, an eine COO-Gruppe gebunden ist oder HO- (C₃H₆) oder HO- (C₄H₈) sind,
n bezogen auf einen molaren Durchschnitt eine Zahl von 40 bis 50 ist,
m bezogen auf einen molaren Durchschnitt eine Zahl von 1 bis 7 ist, und
a+b bezogen auf einen molaren Durchschnitt eine Zahl von 4 bis 9 ist,
**dadurch gekennzeichnet, dass** a bezogen auf einen molaren Durchschnitt eine Zahl von 2,8 bis 8,1 ist und b bezogen auf einen molaren Durchschnitt eine Zahl von 0,4 bis 2,7 ist und die Gruppen -O-C₄H₈- in den Struktureinheiten, die mit "b" angegeben sind, und in den Struktureinheiten HO- (C₄H₈) die Formel -O-CH (CH₃) -CH (CH₃) - aufweisen.

2. Polyester nach Anspruch 1, **dadurch gekennzeichnet, dass** die Summe a+b bezogen auf einen molaren Durchschnitt eine Zahl von 5 bis 8, a bezogen auf einen molaren Durchschnitt eine Zahl von 3,5 bis 7,2 und b bezogen auf einen molaren Durchschnitt eine Zahl von 0,5 bis 2,4 ist.

3. Polyester nach Anspruch 1, **dadurch gekennzeichnet, dass** die Summe a+b bezogen auf einen molaren Durchschnitt eine Zahl von 6 bis 7, a bezogen auf einen molaren Durchschnitt eine Zahl von 4,2 bis 6,3 und b bezogen auf einen molaren Durchschnitt eine Zahl von 0,6 bis 2,1 ist.

4. Polyester nach Anspruch 3, **dadurch gekennzeichnet, dass** a bezogen auf einen molaren Durchschnitt eine Zahl von 4,8 bis 5,6 und b bezogen auf einen molaren Durchschnitt eine Zahl von 1,2 bis 1,4 ist.

5. Polyester nach einem oder mehreren der Ansprüche 1 bis 4, **dadurch gekennzeichnet, dass** m bezogen auf einen molaren Durchschnitt eine Zahl von 2 bis 5 ist.

6. Polyester nach Anspruch 5, **dadurch gekennzeichnet, dass** m bezogen auf einen molaren Durchschnitt 3 ist.

7. Polyester nach einem oder mehreren der Ansprüche 1 bis 6, **dadurch gekennzeichnet, dass** n bezogen auf einen molaren Durchschnitt eine Zahl von 43 bis 47 ist.

8. Polyester nach Anspruch 7, **dadurch gekennzeichnet, dass** n bezogen auf einen molaren Durchschnitt eine Zahl von 44 bis 46 ist.

9. Polyester nach Anspruch 8, **dadurch gekennzeichnet, dass** n bezogen auf einen molaren Durchschnitt 45 ist.

10. Polyester nach einem oder mehreren der Ansprüche 1, 2 und 5 bis 8, **dadurch gekennzeichnet, dass**
R¹ und R² unabhängig voneinander H₃C-(OC₂H₄) ₙ-(OC₃H₆)ₘ sind,
wobei
die - (OC₂H₄) -Gruppen und die -(OC₃H₆)-Gruppen blockweise angeordnet sind und der Block, der aus den -(OC₃H₆)-Gruppen besteht, an eine COO-Gruppe gebunden ist,
n bezogen auf einen molaren Durchschnitt eine Zahl von 44 bis 46 ist,
m bezogen auf einen molaren Durchschnitt 3 ist, und
a+b bezogen auf einen molaren Durchschnitt eine Zahl von 5 bis 8 ist.

11. Polyester nach Anspruch 10, **dadurch gekennzeichnet, dass** a bezogen auf einen molaren Durchschnitt eine Zahl von 3,5 bis 7,2 und b bezogen auf einen molaren Durchschnitt eine Zahl von 0,5 bis 2,4 ist.

12. Polyester nach Anspruch 10, **dadurch gekennzeichnet, dass**
R¹ und R² unabhängig voneinander H₃C- (OC₂H₄) ₙ- (OC₃H₆) m sind,
wobei
die - (OC₂H₄) -Gruppen und die - (OC₃H₆) -Gruppen blockweise angeordnet sind und der Block, der aus den -(OC₃H₆)-Gruppen besteht, an eine COO-Gruppe gebunden ist,
n bezogen auf einen molaren Durchschnitt eine Zahl von 44 bis 46 ist,
m bezogen auf einen molaren Durchschnitt 3 ist, und
a+b bezogen auf einen molaren Durchschnitt eine Zahl von 6 bis 7 ist.

13. Polyester nach Anspruch 12, **dadurch gekennzeichnet, dass** a bezogen auf einen molaren Durchschnitt eine Zahl von 4,2 bis 6,3 und b bezogen auf einen molaren Durchschnitt eine Zahl von 0,6 bis 2,1 ist.

14. Polyester nach einem oder mehreren der Ansprüche 10 bis 13, **dadurch gekennzeichnet, dass** n bezogen auf einen molaren Durchschnitt 45 ist.

15. Polyester nach einem oder mehreren der Ansprüche 1 bis 14, **dadurch gekennzeichnet, dass** R¹ und R² unabhängig voneinander H₃C-(OC₂H₄) ₙ-(OC₃H₆)ₘ sind,
wobei
die -(OC₂H₄)-Gruppen und die - (OC₃H₆) -Gruppen blockweise angeordnet sind und der Block, der aus den -(OC₃H₆)-Gruppen besteht, an eine COO-Gruppe gebunden ist,
n bezogen auf einen molaren Durchschnitt 45 ist,
m bezogen auf einen molaren Durchschnitt 3 ist,
a+b bezogen auf einen molaren Durchschnitt eine Zahl von 6 bis 7 ist,
a bezogen auf einen molaren Durchschnitt eine Zahl von 4,8 bis 5,6 ist, und
b bezogen auf einen molaren Durchschnitt eine Zahl von 1,2 bis 1,4 ist.

16. Polyester nach einem oder mehreren der Ansprüche 1 bis 3 und 5 bis 14,
**dadurch gekennzeichnet, dass** das molare Verhältnis der Struktureinheiten, die mit "a" angegeben sind, zu den Struktureinheiten, die mit "b" angegeben sind, 70:30 bis 90:10 beträgt.

17. Polyester nach einem oder mehreren der Ansprüche 1 bis 16, **dadurch gekennzeichnet, dass** das molare Verhältnis der Struktureinheiten, die mit "a" angegeben sind, zu den Struktureinheiten, die mit "b" angegeben sind, 80:20 beträgt.

18. Polyester nach einem oder mehreren der Ansprüche 1 bis 17, **dadurch gekennzeichnet, dass** die Struktureinheiten, die mit "a" angegeben sind, und die Struktureinheiten, die mit "b" angegeben sind, blockweise, abwechselnd oder statistisch verteilt sind.

19. Polyester nach Anspruch 18, **dadurch gekennzeichnet, dass** die Struktureinheiten, die mit "a" angegeben sind, und die Struktureinheiten, die mit "b" angegeben sind, statistisch verteilt sind.

20. Verfahren zur Herstellung eines Polyesters nach einem oder mehreren der Ansprüche 1 bis 19, **dadurch gekennzeichnet, dass** es das Erwärmen von Dimethylterephthalat, 1,2-Propylenglykol, 2,3-Butylenglykol und H₃C-(OC₂H₄)ₙ (OC₃H₆)ₘ-OH, wobei die - (OC₂H₄) - Gruppen und die -(OC₃H₆)-Gruppen blockweise angeordnet sind und der Block, der aus den -(OC₃H₆)-Gruppen besteht, an die Hydroxylgruppe -OH gebunden ist und n und m wie in Anspruch 1 definiert sind, unter Zuhilfenahme eines Katalysators auf Temperaturen von 160 bis 220°C, zunächst bei Normaldruck, und dann Fortsetzen der Reaktion bei vermindertem Druck bei Temperaturen von 160 bis 240°C umfasst.

## Revendications

1. Polyester répondant à la formule (I) suivante 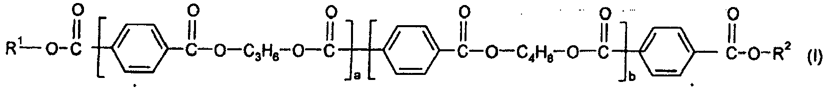 dans lequel
R¹ et R² sont chacun indépendamment de l'autre un groupe H₃C-(OC₂H₄) ₙ-(OC₃H₆)ₘ dans lequel les groupes -(OC₂H₄) et les groupes - (OC₃H₆) sont agencés en blocs et le bloc constitué des groupes -(OC₃H₆) est lié à un groupe COO ou sont des groupes HO-(C₃H₆) ou HO- (C₄H₈),
n est sur la base d'une moyenne molaire un nombre de 40 à 50,
m est sur la base d'une moyenne molaire un nombre de 1 à 7 et
a + b est sur la base d'une moyenne molaire un nombre de 4 à 9,
**caractérisé en ce que** a sur la base d'une moyenne molaire est un nombre de 2,8 à 8,1 et b sur la base d'une moyenne molaire est un nombre de 0,4 à 2,7 et les groupes -O-C₄H₈- dans les motifs de structure ayant l'indice « b » et dans les motifs de structure HO-(C₄H₈) sont de formule -O-CH(CH₃)-CH(CH₃)-.

2. Polyester selon la revendication 1, **caractérisé en ce que** la somme a + b sur la base d'une moyenne molaire est un nombre de 5 à 8, a sur la base d'une moyenne molaire est un nombre de 3,5 à 7,2 et b sur la base d'une moyenne molaire est un nombre de 0,5 à 2,4.

3. Polyester selon la revendication 1, **caractérisé en ce que** la somme a + b sur la base d'une moyenne molaire est un nombre de 6 à 7, a sur la base d'une moyenne molaire est un nombre de 4,2 à 6,3 et b sur la base d'une moyenne molaire est un nombre de 0,6 à 2,1.

4. Polyester selon la revendication 3, **caractérisé en ce que** a sur la base d'une moyenne molaire est un nombre de 4,8 à 5,6 et b sur la base d'une moyenne molaire est un nombre de 1,2 à 1,4.

5. Polyester selon une ou plusieurs des revendications 1 à 4, **caractérisé en ce que** m sur la base d'une moyenne molaire est un nombre de 2 à 5.

6. Polyester selon la revendication 5, **caractérisé en ce que** m sur la base d'une moyenne molaire vaut 3.

7. Polyester selon une ou plusieurs des revendications 1 à 6, **caractérisé en ce que** n sur la base d'une moyenne molaire est un nombre de 43 à 47.

8. Polyester selon la revendication 7, **caractérisé en ce que** n sur la base d'une moyenne molaire est un nombre de 44 à 46.

9. Polyester selon la revendication 8, **caractérisé en ce que** n sur la base d'une moyenne molaire vaut 45.

10. Polyester selon une ou plusieurs des revendications 1, 2 et 5 à 8, **caractérisé en ce que**
R¹ et R² sont chacun indépendamment de l'autre un groupe H₃C-(OC₂H₄) ₙ-(OC₃H₆)ₘ dans lequel les groupes - (OC₂H₄) et les groupes - (OC₃H₆) sont agencés en blocs et le bloc constitué des groupes -(OC₃H₆) est lié à un groupe COO,
n est sur la base d'une moyenne molaire un nombre de 44 à 46,
m vaut sur la base d'une moyenne molaire 3 et
a + b est sur la base d'une moyenne molaire un nombre de 5 à 8.

11. Polyester selon la revendication 10, **caractérisé en ce que** a sur la base d'une moyenne molaire est un nombre de 3,5 à 7,2 et b sur la base d'une moyenne molaire est un nombre de 0,5 à 2,4.

12. Polyester selon la revendication 10, **caractérisé en ce que**
R¹ et R² sont chacun indépendamment de l'autre un groupe H₃C-(OC₂H₄)ₙ-(OC₃H₆)ₘ dans lequel les groupes -(OC₂H₄) et les groupes -(OC₃H₆) sont agencés en blocs et le bloc constitué des groupes -(OC₃H₆) est lié à un groupe COO,
n est sur la base d'une moyenne molaire un nombre de 44 à 46,
m vaut sur la base d'une moyenne molaire 3 et
a + b est sur la base d'une moyenne molaire un nombre de 6 à 7.

13. Polyester selon la revendication 12, **caractérisé en ce que** a sur la base d'une moyenne molaire est un nombre de 4,2 à 6,3 et b sur la base d'une moyenne molaire est un nombre de 0,6 à 2,1.

14. Polyester selon une ou plusieurs des revendications 10 à 13, **caractérisé en ce que** n sur la base d'une moyenne molaire vaut 45.

15. Polyester selon une ou plusieurs des revendications 1 à 14, **caractérisé en ce que**
R¹ et R² sont chacun indépendamment de l'autre un groupe H₃C-(OC₂H₄) ₙ-(OC₃H₆)ₘ dans lequel les groupes -(OC₂H₄) et les groupes -(OC₃H₆) sont agencés en blocs et le bloc constitué des groupes -(OC₃H₆) est lié à un groupe COO,
n vaut sur la base d'une moyenne molaire 45,
m vaut sur la base d'une moyenne molaire 3,
a + b est sur la base d'une moyenne molaire un nombre de 6 à 7,
a sur la base d'une moyenne molaire est un nombre de 4,8 à 5,6 et
b sur la base d'une moyenne molaire est un nombre de 1,2 à 1,4.

16. Polyester selon une ou plusieurs des revendications 1 à 3 et 5 à 14, **caractérisé en ce que** le rapport molaire motifs de structure ayant l'indice « a » :motifs de structure ayant l'indice « b » est de 70:30 à 90:10.

17. Polyester selon une ou plusieurs des revendications 1 à 16, **caractérisé en ce que** le rapport molaire motifs de structure ayant l'indice « a »:motifs de structure ayant l'indice « b » est de 80:20.

18. Polyester selon une ou plusieurs des revendications 1 à 17, **caractérisé en ce que** les motifs de structure ayant l'indice a et les motifs de structure ayant l'indice b sont répartis par blocs, en alternance ou statistiquement.

19. Polyester selon la revendication 18, **caractérisé en ce que** les motifs de structure ayant l'indice a et les motifs de structure ayant l'indice b sont répartis statistiquement.

20. Procédé pour la préparation d'un polyester selon une ou plusieurs des revendications 1 à 19, **caractérisé en ce qu'**il comprend le chauffage de téréphtalate de diméthyle, de propylène-1,2-glycol, de butylène-2,3-glycol et de H₃C-(OC₂H₄)ₙ-(OC₃H₆)ₘ-OH, dans lequel les groupes -(OC₂H₄) et les groupes -(OC₃H₆) sont agencés en blocs et le bloc constitué des groupes -(OC₃H₆) est lié au groupe hydroxyle -OH et n et m sont tels que définis dans la revendication 1, avec l'ajout d'un catalyseur, à des températures de 160 à 220 °C, d'abord à pression atmosphérique, et ensuite la poursuite de la réaction sous pression réduite à des températures de 160 à 240 °C.
